# EUROPEAN PATENT APPLICATION

(11) **EP 2 187 497 A1**
(43) Date of publication of application: **19.05.2010**
(21) Application number: 08790320.9
(22) Date of filing: 31.07.2008
(51) Int. Cl.: H02J 7/00, H01M 10/44

(54) **CHARGING CIRCUIT, AND BATTERY PACK AND CHARGING SYSTEM EQUIPPED WITH SAME**

(30) Priority: 31.08.2007 JP 2007226359
(71) Applicant: Panasonic Corporation, Kadoma-shi Osaka 571-8501 (JP)
(72) Inventor: TANIGUCHI, Keitaro c/o Panasonic Corporation, Osaka 540-6207 (JP)
(74) Representative: Schwabe - Sandmair - Marx
(86) International application number: PCT/JP2008/002056
(87) International publication number: WO 2009/028135

(57) **Abstract**

A charging circuit includes: a battery connection terminal for connection to a secondary battery; a power supply connection terminal for receiving, from a power supply unit which outputs a current for charging the secondary battery, the current; first and second switching elements, connected in series between the power supply connection terminal and the battery connection terminal, and turning on and off the current flowing from the power supply connection terminal to the battery connection terminal; a current detection unit for detecting the current flowing from the power supply connection terminal to the battery connection terminal; a charging control unit for supplying a pulse-shape charging current to the battery connection terminal by repeating a process of turning on the first and second switching elements, a process of turning on the first switching element and turning off the second switching element, and a process of turning off the first switching element and turning on the second switching element; and a malfunction judgment unit for judging that at least one of the first and second switching elements is malfunctioning in an interval in which only one of the first and second switching elements is turned on by the charging control unit when the current detected by the current detection unit exceeds a current threshold value set so as to enable judgment as to whether current is flowing to the battery connection terminal.

## Description

### Technical Field

This invention relates to a charging circuit used to charge a secondary battery, as well as a battery pack and charging system comprising this charging circuit.

### Background Art

There exists electronic equipment of the prior art which comprises a charging circuit to charge a secondary battery. Such charging circuits generally are provided with a switching element in the charging path to prevent overcharging of the secondary battery. In such charging circuits, during charging the switching element is put into the conducting state, and the battery voltage or charging current is monitored. And, when the secondary battery is detected to be fully charged based on the battery voltage or the charging current, the above-described switching element is put into the nonconducting state, and subsequent charging is stopped, whereby that degradation, liquid leakage, emission of smoke, conflagrations, and similar of the secondary battery due to overcharging are prevented.

On the other hand, if the above-described switching element malfunctions and is fixed in the conducting state, charging cannot be stopped even when the secondary battery is detected to be fully charged based on the battery voltage or the charging current. As a result, there are concerns that overcharging may occur and that degradation of the secondary battery, liquid leakage, emission of smoke, conflagrations, and similar may occur. For this reason, charging circuits are known which comprise malfunction diagnostics functions to detect malfunction of the switching element.

For example, Patent Document 1 described technology in which a constant-voltage power supply circuit which charges a secondary battery and a constant-current circuit are connected in series, and malfunctioning of the switching element of the constant-current circuit is detected by judging whether the difference between the battery voltage when a constant current is supplied to the secondary battery from the constant-voltage power supply circuit and the constant-current circuit, and the battery voltage when the switching element of this constant-current circuit is turned off for a constant interval and the current supply to the secondary battery is stopped, is normal. Upon detecting malfunctioning of the switching element of the constant-current circuit, the switching element of the constant-voltage power supply circuit, which is upstream from the constant-current circuit, is turned off to stop charging of the secondary battery, and overcharging of the secondary battery is prevented.

However, in the technology described in Patent Document 1, malfunction diagnostics of the switching element are executed before the start of charging and after charging completion, when no functional operations other than charging operation are being performed, so that there is the problem that even when the switching element malfunctions during charging, a malfunction cannot be detected until charging is completed. Further, even if malfunction diagnostics are executed during charging, using the technology described in Patent Document 1, the switching element of the constant-current circuit must be turned off for malfunction detection, so that there is the problem that charging is interrupted.
Patent Document 1: Japanese Patent Application Laid-open No. H6-189459

### Disclosure of the Invention

This invention was devised in light of such circumstances, and has as an object the provision of a charging circuit, battery pack, and charging system, which, during charging of a secondary battery, can detect malfunctioning of a switching element rapidly and without interrupting charging.

The charging circuit according to one aspect of the invention has: a battery connection terminal for connection to a secondary battery; a power supply connection terminal for receiving, from a power supply unit which outputs a current for charging the secondary battery, the current; first and second switching elements, connected in series between the power supply connection terminal and the battery connection terminal, and turning on and off the current flowing from the power supply connection terminal to the battery connection terminal; a current detection unit for detecting the current flowing from the power supply connection terminal to the battery connection terminal; a charging control unit for supplying a pulse-shape charging current to the battery connection terminal by repeating a process of turning on the first and second switching elements, a process of turning on the first switching element and turning off the second switching element, and a process of turning off the first switching element and turning on the second switching element; and a malfunction judgment unit for judging that at least one of the first and second switching elements is malfunctioning in an interval in which only one of the first and second switching elements is turned on by the charging control unit when the current detected by the current detection unit exceeds a current threshold value set so as to enable judgment as to whether current is flowing to the battery connection terminal.

In a charging circuit with such a configuration, whether a malfunction has occurred can be judged while continuing the supply of current in the form of repeated pulses while charging the secondary battery in the form of repeated pulses, whereby malfunctioning of a switching element can be detected rapidly and without interrupting charging.

Further, a battery pack according to one aspect of the invention comprises the above-described charging circuit, and the secondary battery.

In a battery pack of this configuration, a secondary battery can be charged by supplying a charging current in the form of repeated pulses to the secondary battery, and moreover, during charging it is possible to judge whether a malfunction has occurred while continuing the supply of current in the form of repeated pulses, so that malfunctioning of a switching element can be detected rapidly and without interrupting charging.

Further, a charging system according to one aspect of the invention comprises the above-described charging circuit, the secondary battery, and the power supply unit.

Further, in a charging system of this configuration, charging is performed by supplying the output current of the power supply unit to the secondary battery as a pulse-form charging current in the charging circuit. And, by supplying a charging current in the form of repeated pulses to the secondary battery to perform charging of the secondary battery, during charging it is possible to judge whether a malfunction has occurred while continuing the supply of current in the form of repeated pulses, so that malfunctioning of a switching element can be detected rapidly and without interrupting charging.

### Brief Description of the Drawings

[Fig 1] Fig. 1 is a block diagram showing an example of the configuration of a battery back comprising the charging circuit of an embodiment of the invention and of a charging system comprising the battery pack.
[Fig 2] Fig. 2 is an explanatory diagram to explain operation during charging of the charging system shown in Fig. 1.
[Fig 3] Fig. 3 is an explanatory diagram to explain operation when a short-circuit malfunction of a switching element occurs in the charging system shown in Fig. 1.
[Fig 4] Fig. 4 is an explanatory diagram to explain operation when an open-circuit malfunction of a switching element occurs in the charging system shown in Fig. 1.

### Best Mode for Carrying Out the Invention

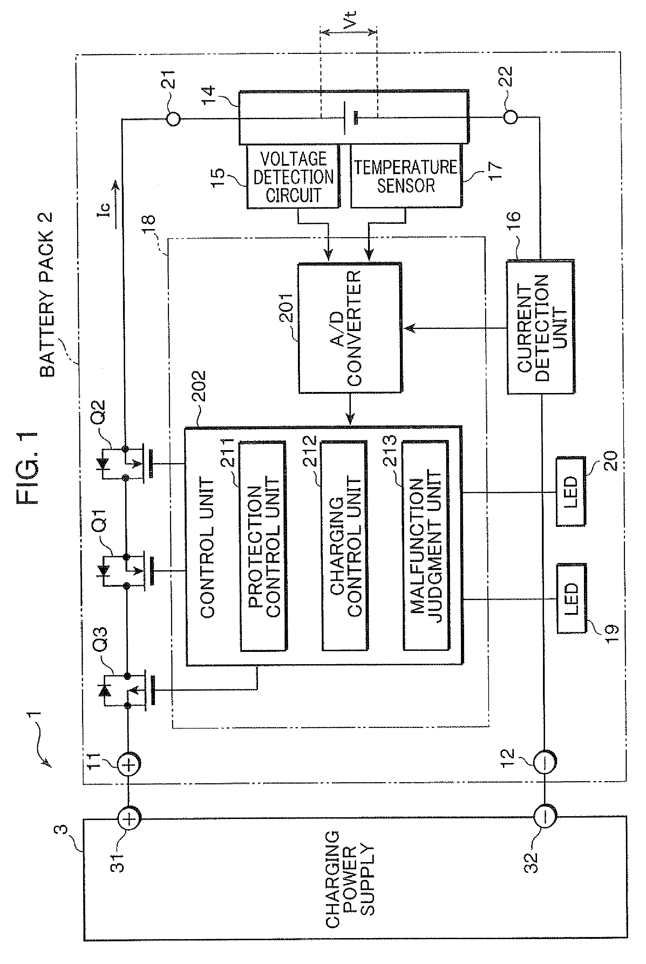

Below, embodiments of the invention are explained based on the drawings. In the drawings, the same symbol assigned to units indicates that the units are the same, and an explanation thereof is omitted. Fig. 1 is a block diagram showing an example of the configuration of a battery back comprising the charging circuit of an embodiment of the invention and of a charging system comprising the battery pack. The charging system 1 shown in Fig. 1 is configured with the battery pack 2 connected to the charging power supply 3 (power supply unit). This charging system 1 may be configured as an electronic equipment system, further comprising a load device, not shown, to which electricity is supplied from the battery pack 2. In this case, the battery pack 2 is charged by the charging power supply 3 in Fig. 1, but the battery pack 2 is installed in the load device, and is charged via the load device.

The charging power supply 3 is a power supply circuit which outputs current for charging secondary batteries to the battery pack 2; for example, a constant-voltage power supply device is used. The charging power supply 3 is not limited to a constant-voltage power supply device, and may for example be a charging device which performs charging by constant-current constant-voltage (CCCV) charging, or using various other charging methods.

The battery pack 2 comprises a charging circuit comprising connection terminals 11, 12 (power supply connection terminals), connection terminals 21, 22 (battery connection terminals), a voltage detection circuit 15, a current detection circuit 16, a temperature sensor 17, a control IC 18, and LEDs (Light Emitting Diodes) 19, 20 (reporting units), and switching elements Q1, Q2, Q3 as well as a secondary battery 14. The control IC 18 comprises an analog/digital (A/D) converter 201 and a control unit 202.

The connection terminals 11, 12 are connection terminals which connect the charging power supply 3 and the battery pack 2. The connection terminals 11, 12 need only be capable of electrically connecting the charging power supply 3 and the battery pack 2, and may for example be electrodes, connectors, terminal blocks, or similar, and may also be a wiring pattern of lands, pads, or similar.

The connection terminals 21, 22 are connection terminals which connect the above-described charging circuit and the secondary battery 14. The connection terminals 21, 22 need only be capable of electrically connecting the charging circuit and the secondary battery 14, and may for example be electrodes, connectors, terminal blocks, or similar, and may also be a wiring pattern of lands, pads, or similar.

The connection terminal 11 is connected, via the discharge switching element Q3, charging switching elements Q1 and Q2 (first and second switching elements), and connection terminal 21, to the positive electrode of the secondary battery 14. FETs (Field Effect Transistors), for example, are used as the switching elements Q1, Q2, Q3. The switching element Q3 is for example a p-channel FET, and the cathode of the parasitic diode is in the direction of the secondary battery 14. The switching elements Q1, Q2 are for example n-channel FETs, and the cathodes of the parasitic diodes are in the direction of the connection terminal 11.

Because the turn-on resistance of a FET is extremely low, by using FETs as the switching elements Q1, Q2, Q3, heat losses during charging and discharging can be reduced. No limitations in particular are placed on the type of switching element, but IGBTs (Insulated Gate Bipolar Transistors) may also be used as the switching elements Q1, Q2, Q3. An IGBT has an extremely high withstand voltage, and so by using IGBTs as the switching elements Q1, Q2, Q3, charging and discharging at high voltages are possible.

Further, the connection terminal 12 is connected, via the current detection unit 16 and connection terminal 22, to the negative electrode of the secondary battery 14, and a charge/discharge path is formed from the connection terminal 11, via the switching elements Q3, Q1 and Q2, the connection terminal 21, the secondary battery 14, the connection terminal 22, and the current detection unit 16, to reach the connection terminal 12. The negative electrode of the secondary battery 14 is the circuit ground.

The current detection unit 16 comprises, for example, a shut resistor for current detection and a Hall element. And, the current detection unit 16 converts the charge current and discharge current of the secondary battery 14 into a voltage value, which is output to the analog/digital converter 201.

The secondary battery 14 is for example a lithium ion secondary battery, a nickel hydride secondary battery, or similar. The secondary battery 14 is not limited to a single cell, and may for example be a battery module in which a plurality of secondary batteries are series-connected, or may for example be a battery module in which a plurality of secondary batteries are parallel-connected, or a battery module in which there is a combination of series and parallel connections.

The temperature sensor 17 is a temperature sensor which detects the temperature of the secondary battery 14. And, the temperature of the secondary battery 14 detected by the temperature sensor 17 is input to the analog/digital converter 201. The terminal voltage Vt of the secondary battery 14 is detected by the voltage detection circuit 15, and is input to the analog/digital converter 201. And, the current value of the charge current Ic detected by the current detection unit 16 is also input to the analog/digital converter 201. The analog/digital converter 201 converts each of these input values into digital values, which are output to the control unit 202.

The control unit 202 comprises for example a CPU (Central Processing Unit), which executes prescribed computation processing, ROM (Read Only Memory), in which a prescribed control program is stored, RAM (Random Access Memory), which temporarily stores data, and auxiliary circuits of these and similar. By executing the control program stored in ROM, the control unit 202 functions as a protection control unit 211, a charging control unit 212, and a malfunction judgment unit 213.

The charging control unit 212 adjusts the current flowing in the secondary battery 14 by turning on and off the charging voltage, in pulse form, output from the charging power supply 3, and charges the secondary battery 14 by pulse charging. Specifically, by repeating a process of turning on only the switching element Q1, for example, a process of turning on the switching elements Q1 and Q2, and a process of turning on only the switching element Q2, the charging control unit 212 supplies a charging current in pulse form to the secondary battery 14 connected to the connection terminals 21, 22, and charges the secondary battery 14 by the so-called pulse charging method.

The malfunction judgment unit 213 judges that a short-circuit malfunction is occurring in at least one among the switching elements Q1, Q2 when, during an interval in which only one among the switching elements Q1, Q2 is turned on by the charging control unit 212, the current detected by the current detection unit 16 exceeds a current threshold value Ith set in advance for use in judging whether current exists, that is, when the existence of a charging current is detected. The current threshold value Ith is for example set to a current value which is slightly larger than the current detection precision of the current detection unit I6 and the analog/digital converter 201 as well as the leakage currents of the switching elements Q1, Q2, Q3, or similar.

Specifically, when, during an interval in which only the switching element Q1 is turned on by the charging control unit 212, the current detected by the current detection unit 16 exceeds the current threshold Ith, the malfunction judgment unit 213 judges that a short-circuit malfunction is occurring in the switching element Q2, and causes the LED 20 to light. Also, when, during an interval in which only the switching element Q2 is turned on by the charging control unit 212, the current detected by the current detection unit 16 exceeds the current threshold Ith, the malfunction judgment unit 213 judges that a short-circuit malfunction is occurring in the switching element Q1, and causes the LED 19 to light.

Further, when, during an interval in which both the switching elements Q1 and Q2 are turned on by the charging control unit 212, the current detected by the current detection unit 16 is equal to or less than the current threshold value Ith, that is, when the absence of a charging current is detected, the malfunction judgment unit 213 judges that an open-circuit malfunction is occurring in at least one among the switching elements Q1 and Q2, and causes the LEDs 19 and 20 to light.

Reporting units are not limited to the LEDs 19 and 20, and for example a message reporting a malfunction may be displayed using a liquid crystal display or similar, or a warning buzzer or other sound may be used to report the occurrence of a malfunction; or, a communication circuit may be used to report the occurrence of a malfunction to the load equipment driven by the battery pack 2 or to the charging device.

The protection control unit 211 uses the various input values from the analog/digital converter 201 to detect short-circuits across the connection terminals 11 and 12, anomalous currents and similar from the load equipment proper, not shown, connected to the connection terminals 11 and 12, anomalies in portions outside the battery pack 2, anomalous temperature rises in the secondary battery 14, and overcharging and other anomalies in the secondary battery 14. Specifically, when for example the current value detected by the current detection unit 16 exceeds an anomalous current judgment threshold value set in advance, the protection control unit 211 judges that a short-circuit across the connection terminals 11 and 12, and an anomaly based on an anomalous current from the load equipment proper, not shown, have occurred.

Also, when for example the temperature of the secondary battery 14 detected by the temperature sensor 17 exceeds an anomalous temperature judgment threshold value set in advance, the protection control unit 211 judges that an anomaly has occurred in the secondary battery 14. And, when such an anomaly has been detected, the protection control unit 211 turns off the switching elements Q1, Q2, Q3, and performs protection operation to protect the secondary battery 14 from overcurrents, overheating, and other anomalies.

Further, when the terminal voltage Vt detected by the voltage detection circuit 15 exceeds an overcharge detection voltage set in advance, the protection control unit 211 judges that overcharging has occurred, turns off the switching elements Q1 and Q2, and performs protection operation to protect the secondary battery 14 from overcharging.

Further, when for example the terminal voltage Vt of the secondary battery 14 detected by the voltage detection circuit 15 is equal to or less than a discharge prohibition voltage set in advance to prevent overdischarge of the secondary battery, the protection control unit 211 turns off the switching element Q3, and prevents degradation of the secondary battery 14 due to overdischarge.

Further, when the malfunction judgment unit 213 judges that a short-circuit malfunction is occurring in the switching element Q1, the protection control unit 211 turns off the switching element Q2 and stops charging of the secondary battery 14. Further, when the malfunction judgment unit 213 judges that a short-circuit malfunction is occurring in the switching element Q2, the protection control unit 211 turns off the switching element Q1 and stops charging of the secondary battery 14. A configuration may also be employed in which, when the malfunction judgment unit 213 judges that a short-circuit malfunction is occurring in either of the switching elements Q1 and Q2, the protection control unit 211 turns off the switching elements Q1 and Q2.

Further, when the malfunction judgment unit 213 judges that an open-circuit malfunction is occurring in either of the switching elements Q1 and Q2, the protection control unit 211 turns off the switching elements Q1 and Q2.

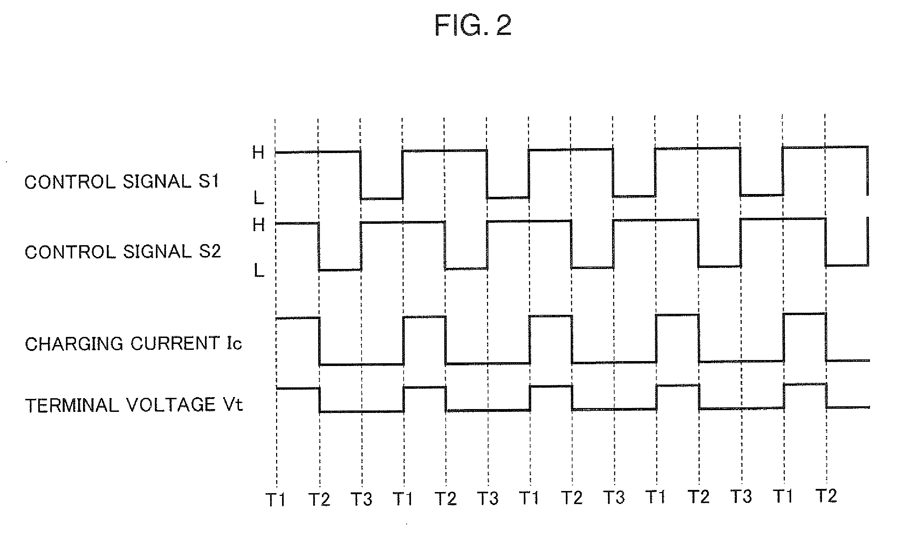

Next, operation of the charging system 1 configured as described above is explained. Fig. 2, Fig. 3, and Fig. 4 are explanatory diagrams to explain operation during charging in the charging system 1 shown in Fig. 1, showing the relationship between the control signals S1, S2 which turn the switching elements Q1, Q2 on and off, the charging current Ic flowing in the secondary battery 14, and the terminal voltage Vt of the secondary battery 14.

First, malfunction diagnostics when neither of the switching elements Q1 and Q2 are malfunctioning are explained. Fig. 2 shows an example of operation of the charging system 1 in a case when the switching elements Q1 and Q2 are normal. Further, at the time of charging, the switching element Q3 is turned on by the charging control unit 212. The switching element Q3 is a switching element for use in discharge control, but by being turned on, the turn-on resistance is lowered.

Next, at time T1 in Fig. 2, the control signals S1 and S2 from the charging control unit 212 are raised to high level (H), and the switching elements Q1 and Q2 are turned on. Then, the charging current Ic supplied from the charging power supply 3 flows, via the connection terminal 11, switching elements Q3, Q1, Q2, connection terminal 21, secondary battery 14, connection terminal 22, and current detection unit 16, to the connection terminal 12, and the charging current Ic is detected by the current detection unit 16. In the following explanation, the timing with which the same operation is performed are indicated by the same timing symbol, and an explanation thereof is omitted.

And, the malfunction judgment unit 213 compares the charging current Ic detected by the current detection unit 16 with the current threshold value Ith, and when the charging current Ic exceeds the current threshold value Ith, the malfunction judgment unit 213 judges that an open-circuit malfunction is not occurring in the switching elements Q1 and Q2.

Next, at time T2 in Fig. 2 the charging control unit 212 raises the control signal S1 to high level, lowers the control signal S2 to low level, and turns the switching element Q1 on and the switching element Q2 off. Then, the charging current Ic supplied from the charging power supply 3 is shut off by the switching element Q2, and the charging current Ic detected by the current detection unit 16 becomes zero. And, the malfunction judgment unit 213 compares the charging current Ic detected by the current detection unit 16 with the current threshold value Ith, and when the charging current Ic is less than the current threshold value Ith, the malfunction judgment unit 213 judges that a short-circuit malfunction is not occurring in the switching element Q2.

Next, at time T3 in Fig. 2, the charging control unit 212 lowers the control signal S 1 to low level, raises the control signal S2 to high level, and turns the switching element Q1 off and the switching element Q2 on. Then, the charging current Ic supplied from the charging power supply 3 is shut off by the switching element Q1, and the charging current Ic detected by the current detection unit 16 becomes zero. And, the malfunction judgment unit 213 compares the charging current Ic detected by the current detection unit 16 with the current threshold value Ith, and when the charging current Ic is less than the current threshold value Ith, the malfunction judgment unit 213 judges that a short-circuit malfunction is not occurring in the switching element Q1.

In this way, by repeating the operations at times T1 to T3, malfunction judgments of switching elements can be performed rapidly during charging of the secondary battery 14 by pulse charging, without interrupting the charging.

And, by subsequently repeating the operations at times T1 to T3, the charging current Ic is supplied to the secondary battery 14 in pulse form during the interval between times T1 and T2, so that the secondary battery 14 is pulse-charged. In this case, as the result of appropriate adjustment of the intervals T1 to T2, T2 to T3, and T3 to T1 by the charging control unit 212, the charging current supplied to the secondary battery 14 is controlled.

In the interval between times T1 and T2, the terminal voltage Vt of the secondary battery 14 is equal to (charging current Ic) x (internal resistance value of secondary battery 14) + (open-circuit voltage of secondary battery 14), so that the voltage rises above the open-circuit voltage of the secondary battery 14 by the amount (charging current Ic) x (internal resistance value of secondary battery 14). Further, in the interval T2 to T3 to T1, the terminal voltage Vt of the secondary battery 14 is the open-circuit voltage of the secondary battery 14.

And, when for example the terminal voltage Vt between times T1 and T2 and the terminal voltage Vt of the secondary battery 14 between times T2 to T3 to T1 are substantially equal, that is, when the open-circuit voltage of the secondary battery 14 is substantially equal to the output voltage of the charging power supply 3, the charging control unit 212 judges that the secondary battery 14 has become fully charged, and turns off the switching elements Q1, Q2, Q3 to end charging.

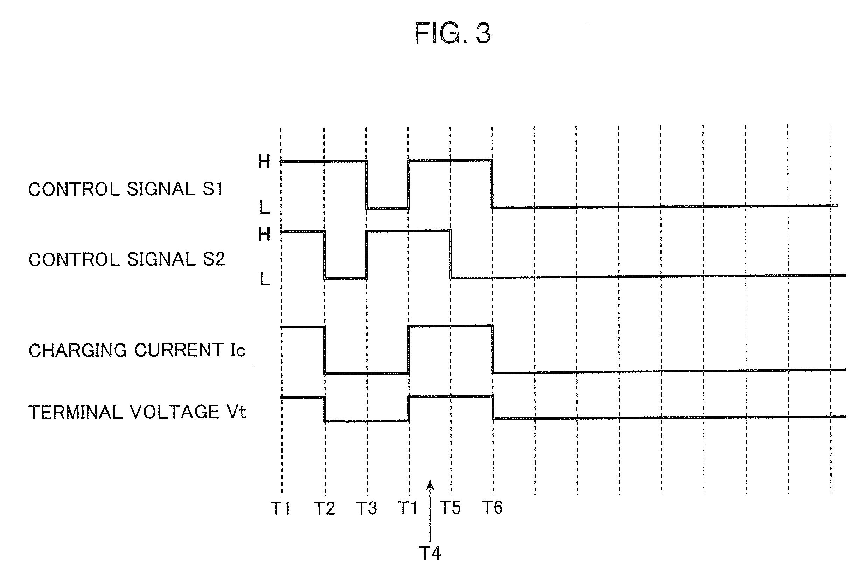

Next, a case is explained in which one among the switching elements Q1 and Q2, for example the switching element Q2, a short-circuit malfunction occurs. Fig. 3 shows an example of operation of the charging system 1 in a case in which a short-circuit malfunction occurs in the switching element Q2 at time T4. First, during charging, the switching element Q3 is turned on by the charging control unit 212.

Next, similarly to the case of Fig. 2, the operations at times T1 to T3 are performed. And, at time T1, the charging control unit 212 raises the control signals S1 and S2 to high level, turning on the switching elements Q1 and Q2, after which, for example, it is supposed that a short-circuit malfunction occurs in the switching element Q2 at time T4.

Then, at time T5, the charging control unit 212 holds the control signal S1 at high level and lowers the control signal S2 to low level. At this time, the switching element Q1 is turned on, but due to the short-circuit malfunction, the switching element Q2 is not turned off. Then, the charging current Ic supplied from the charting power supply 3 flows via the connection terminal 11, switching elements Q3, Q1, Q2, connection terminals 21, secondary battery 14, connection terminal 22, and current detection unit 16 to the connection terminal 12, and the charging current Ic is detected by the current detection unit 16.

Also, the terminal voltage Vt of the secondary battery 14 remains at (charging current Ic) x (internal resistance value of secondary battery 14) + (open-circuit voltage of secondary battery 14), and does not fall to the open-circuit voltage.

And, the malfunction judgment unit 213 compares the charging current Ic detected by the current detection unit 16 with the current threshold value Ith, and because the charging current Ic exceeds the current threshold value Ith, the malfunction judgment unit 213 judges that a short-circuit malfunction is occurring in the switching element Q2, and lights the LED 20 to report the short-circuit malfunction of the switching element Q2.

When the malfunction judgment unit 213 judges that a short-circuit malfunction is occurring in the switching element Q2, the charging control unit 212 lowers the control signals S1 and S2 to low level, to at least turn off the switching element Q1 which is not malfunctioning, shutting off the charging current Ic and ending the charging.

In the above, as shown at the times T1 to T5, even when a short-circuit malfunction occurs in one among the switching elements Q1 and Q2, the switching element malfunction can be detected rapidly during charging of the secondary battery 14 by pulse charging, without interrupting the charging. And, two switching elements for charging are provided in series, so that even when a short-circuit malfunction occurs in one of the switching elements, by turning the other off, the charging current can be shut off, so that safety can be enhanced. Further, an LED indicating a short-circuit malfunction in the switching element is lit, so that the user can be notified of the nature of the malfunction, and replacement of the switching element can easily be performed.

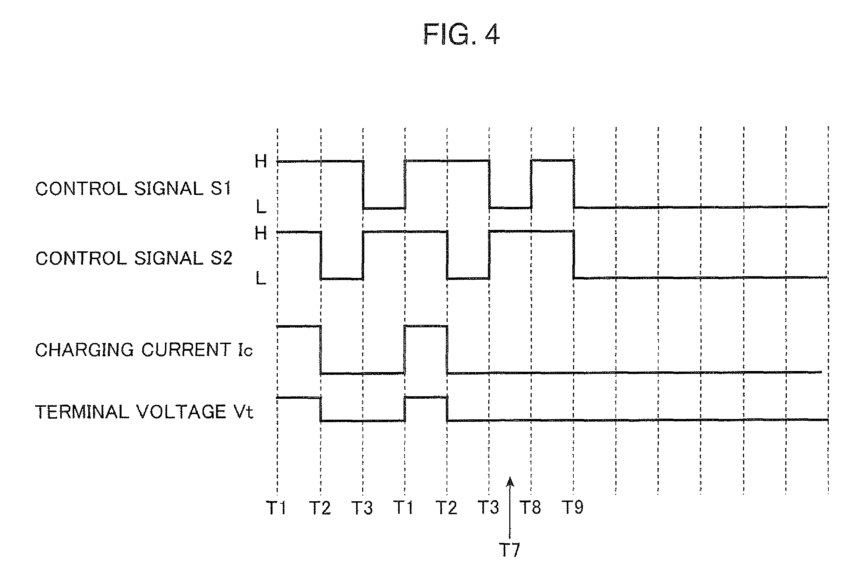

Next, a case is explained in which an open-circuit malfunction occurs in at least one among the switching elements Q1 and Q2. Fig. 4 shows an example of operation of the charging system 1 in a case in which an open-circuit malfunction occurs in at least one among the switching elements Q1 and Q2 at time T7. First, during charging, the charging control unit 212 turns on the switching element Q3.

Next, similarly to the case of Fig. 2, the operations at times T1 to T3 are performed. And, at time T3 in Fig. 4, the charging control unit 212 lowers the control signal S1 to low level and raises the control signal S2 to high level, to turn off the switching element Q1 and turn on the switching element Q2, after which, for example at time T7, a short-circuit malfunction occurs in the switching element Q1.

And, at time T8, the charging control unit 212 raises the control signals S1 and S2 to high level. At this time, the switching element Q2 is turned on, but due to the open-circuit malfunction, the switching element Q1 does not turn on. Then, the charging current Ic supplied from the charging power supply 3 is shut off by the switching element Q1, and the charging circuit Ic detected by the current detection unit 16 becomes zero. In this case, the terminal voltage Vt of the secondary battery 14 is maintained at the open-circuit voltage, and does not rise to the voltage equal to (charging current Ic) x (internal resistance value of secondary battery 14) + (open-circuit voltage of secondary battery 14).

And, the malfunction judgment unit 213 compares the charging current Ic detected by the current detection unit 16 with the current threshold value Ith, and because the charging current Ic is less than the current threshold value Ith, the malfunction judgment unit 213 judges that an open-circuit malfunction is occurring in at least one among the switching elements Q1 and Q2, and lights the LEDs 19 and 20, to report that an open-circuit malfunction is occurring in at least one among the switching elements Q1 and Q2.

Further, when the malfunction judgment unit 213 judges that an open-circuit malfunction is occurring in at least one among the switching elements Q1 and Q2, the charging control unit 212 lowers the control signals S1 and S2 to low level, ending charging.

In the above, as shown for times T1 to T9, even when an open-circuit malfunction occurs in one among the switching elements Q1 and Q2, the malfunction in the switching element can be detected rapidly during charging of the secondary battery 14 by pulse charging, without interrupting charting, and charging can be ended. Further, the fact that an open-circuit malfunction has occurred in a switching element can be reported by lighting the LEDs 19 and 20, so that the user can ascertain the nature of the malfunction, and replacement of the switching element can easily be performed.

That is, the charging circuit according to one aspect of the invention comprises: a battery connection terminal for connection to a secondary battery; a power supply connection terminal for receiving, from a power supply unit which outputs a current for charging the secondary battery, the current; first and second switching elements, connected in series between the power supply connection terminal and the battery connection terminal, and turning on and off the current flowing from the power supply connection terminal to the battery connection terminal; a current detection unit for detecting the current flowing from the power supply connection terminal to the battery connection terminal; a charging control unit for supplying a pulse-shape charging current to the battery connection terminal by repeating a process of turning on the first and second switching elements, a process of turning on the first switching element and turning off the second switching element, and a process of turning off the first switching element and turning on the second switching element; and a malfunction judgment unit for judging that at least one among the first and second switching elements is malfunctioning in an interval in which only one of the first and second switching elements is turned on by the charging control unit when the current detected by the current detection unit exceeds a current threshold value set so as to enable judgment as to whether current is flowing to the battery connection terminal.

According to this configuration, first and second switching elements are interposed in the path of the charging current of the secondary battery. And, the charging control unit repeats a process of turning on the first and second switching elements and supplying a charging current to the secondary battery connected to the battery connection terminal, a process of turning on the first switching element and turning off the second switching element to shut off the charging current by means of only the second switching element, and a process of turning off the first switching element and turning on the second switching element to shut off the charging circuit by means of only the first switching element. By this means, a charging current is provided to the secondary battery connected to the battery connection terminal in the form of repeated pulses, and the secondary battery is charged. And, during intervals in which one of the first and second switching elements is turned on by the charging control unit, when the current detected by the current detection unit exceeds a current threshold value set so as to enable judgment as to whether current is flowing to the battery connection terminal, the malfunction judgment unit judges that a malfunction is occurring in at least one of the first and second switching elements.

In this case, whether a malfunction has occurred can be judged while continuing to supply current by means of repeated pulses during charging of the secondary battery by supplying a charging current to the secondary battery in the form of repeated pulses, so that a malfunction in a switching element can be detected rapidly without interrupting charging.

Further, it is preferable that, when the current detected by the current detection unit exceeds the current threshold value in the process in which the charging control unit turns on the first switching element and turns off the second switching element, the malfunction judgment unit judge that a short-circuit malfunction is occurring in the second switching element, and that, when the current detected by the current detection unit exceeds the current threshold value in the process in which the charging control unit turns off the first switching element and turns on the second switching element, the malfunction judgment unit judge that a short-circuit malfunction is occurring in the first switching element.

By means of this configuration, when the current detected by the current detection unit exceeds the current threshold value in the process in which the charging control unit turns on the first switching element and turns off the second switching element, the malfunction judgment unit judges that a short-circuit malfunction is occurring in the second switching element. And, when the current detected by the current detection unit exceeds the current threshold value in the process in which the charging control unit turns off the first switching element and turns on the second switching element, the malfunction judgment unit judges that a short-circuit malfunction is occurring in the first switching element. By this means, it is possible to judge which among the first and second switching elements is malfunctioning.

Further, it is preferable that, when the current detected by the current detection unit is less than the current threshold value in the process in which the charging control unit turns on the first and second switching elements, the malfunction judgment unit judge that an open-circuit malfunction is occurring in at least one of the first and second switching elements.

By means of this configuration, when the current detected by the current detection unit is less than the current threshold value in the process in which the charging control unit turns on the first and second switching elements, the malfunction judgment unit judges that an open-circuit malfunction is occurring in at least one of the first and second switching elements. In this case, open-circuit malfunctions of the first and second switching elements can be detected.

Further, it is preferable that a protection control unit be further comprised which, when the malfunction judgment unit has judged that a malfunction is occurring, turns off the first and second switching elements.

By means of this configuration, when the malfunction judgment unit judges that a malfunction is occurring, the protection control unit turns off the first and second switching elements, so that even when one of the first and second switching elements has malfunctioned, the other switching element is turned off, so that charging current to the secondary battery is shut off, the risk of overcharging of the secondary battery is reduced, and safety is improved.

Further, a protection control unit may be further comprised which, when the malfunction judgment unit judges that a malfunction is occurring in the first switching element, turns off the second switching element, and when the malfunction judgment unit judges that a malfunction is occurring in the second switching element, turns off the first switching element.

By means of this configuration, when the malfunction judgment unit judges that a malfunction is occurring in the first switching element, the protection control unit turns off the second switching element. And, when the malfunction judgment unit judges that a malfunction is occurring in the second switching element, the protection control unit turns off the first switching element. By this means, even when one of the first and second switching elements has malfunctioned, the other switching element which is not malfunctioning is turned off, so that charging current to the secondary battery is shut off, the risk of overcharging of the secondary battery is reduced, and safety is improved.

Further, it is preferable that a reporting unit be further comprised which, when the malfunction judgment unit judges that a malfunction is occurring, reports the occurrence of the malfunction.

By means of this configuration, when the malfunction judgment unit judges that a malfunction is occurring, the occurrence of the malfunction is reported by the reporting unit, so that the user can ascertain the occurrence of the malfunction.

Further, the battery pack according to one aspect of the invention comprises a charging circuit described above and the secondary battery. By means of this configuration, in the battery pack, the secondary battery can be charged by supplying a charging current repeatedly in pulse form to the secondary battery, and during charging, whether a malfunction has occurred can be judged while continuing the supply of current by repeated pulses, so that malfunctioning of a switching element can be detected rapidly and without interrupting charging.

Further, the charging system according to one aspect of the invention comprises a charging circuit described above, the secondary battery, and the power supply unit. By means of this configuration, charging is performed by supplying the output current of the power supply unit to the secondary battery as a charging current in pulse form in the charging circuit. And, during charging of the secondary battery by supplying the charging current to the secondary battery repeatedly in pulse form, whether a malfunction has occurred can be judged while continuing the supply of current by repeated pulses, so that malfunctioning of a switching element can be detected rapidly and without interrupting charging.

### Industrial Applicability

This invention can be appropriately utilized in the charging systems for battery-equipped devices such as portable personal computers, digital cameras, portable telephones and other electronic equipment, electric automobiles, hybrid automobiles, and other vehicles, and in the charging circuits for secondary batteries, battery packs, and charging systems used as power supplies for such battery-equipped devices.

## Claims

1. A charging circuit, comprising:
a battery connection terminal for connection to a secondary battery;
a power supply connection terminal for receiving, from a power supply unit which outputs a current for charging the secondary battery, the current;
first and second switching elements, connected in series between the power supply connection terminal and the battery connection terminal, and turning on and off the current flowing from the power supply connection terminal to the battery connection terminal;
a current detection unit for detecting the current flowing from the power supply connection terminal to the battery connection terminal;
a charging control unit for supplying a pulse-shape charging current to the battery connection terminal by repeating a process of turning on the first and second switching elements, a process of turning on the first switching element and turning off the second switching element, and a process of turning off the first switching element and turning on the second switching element; and
a malfunction judgment unit for judging that at least one of the first and second switching elements is malfunctioning in an interval in which only one of the first and second switching elements is turned on by the charging control unit when the current detected by the current detection unit exceeds a current threshold value set so as to enable judgment as to whether current is flowing to the battery connection terminal.

2. The charging circuit according to Claim 1, wherein
when the current detected by the current detection unit exceeds the current threshold value in the process in which the charging control unit turns on the first switching element and turns off the second switching element, the malfunction judgment unit judges that a short-circuit malfunction is occurring in the second switching element; and
when the current detected by the current detection unit exceeds the current threshold value in the process in which the charging control unit turns off the first switching element and turns on the second switching element, the malfunction judgment unit judges that a short-circuit malfunction is occurring in the first switching element.

3. The charging circuit according to Claim 1 or Claim 2, wherein, when the current detected by the current detection unit is less than the current threshold value in the process in which the charging control unit turns on the first and second switching elements, the malfunction judgment unit judges that an open-circuit malfunction is occurring in at least one of the first and second switching elements.

4. The charging circuit according to any one of Claims 1 through 3, further comprising a protection control unit for, when the malfunction judgment unit judges that a malfunction is occurring, turning off the first and second switching elements.

5. The charging circuit according to Claim 2, further comprising a protection control unit for, turning off the second switching element when the malfunction judgment unit judges that a malfunction is occurring in the first switching element, and turning off the first switching element when the malfunction judgment unit judges that a malfunction is occurring in the second switching element.

6. The charging circuit according to any one of Claims 1 through 5, further comprising a reporting unit for, when the malfunction judgment unit judges that a malfunction is occurring, reporting the occurrence of a malfunction.

7. A battery back, comprising:
the charging circuit according to any one of Claims 1 through 6; and
the secondary battery.

8. A charging system, comprising:
the charging circuit according to any one of Claims 1 through 6;
the secondary battery; and
the power supply unit.
